# EUROPÄISCHE PATENTSCHRIFT

(11) **EP 0 955 397 B1**
(45) Veröffentlichungstag und Bekanntmachung des Hinweises auf die Patenterteilung: **21.04.2004**
(21) Anmeldenummer: 99102324.3
(22) Anmeldetag: 06.02.1999
(51) Int. Cl.: D01H 4/12

(54) **Offenend-Spinnvorrichtung**
Open-end spinning apparatus
Métier à filer à bout libre

(30) Priorität: 04.05.1998 DE 19819766; 10.08.1998 DE 19835932
(43) Veröffentlichungstag der Anmeldung: 10.11.1999
(73) Patentinhaber: Saurer GmbH & Co. KG, 41069 Mönchengladbach (DE)
(72) Erfinder: Coenen, Norbert, 41199 Mönchengladbach (DE)

(56) Entgegenhaltungen:
- US-A- 3 873 886
- US-A- 4 254 614
- US-A- 4 513 566
- US-A- 5 069 559
- US-A- 5 622 040

## Beschreibung

Die Erfindung betrifft eine Offenend-Spinnvorrichtung mit einer Lageranordnung zur Abstützung eines mit hoher Drehfrequenz rotierenden Spinnrotors gemäß dem Oberbegriff des Anspruches 1.

OE-Spinnvorrichtungen mit derartigen Rotorlagerungsanordnungen sind in verschiedenen, unterschiedlichen Ausführungsformen bekannt und beispielsweise in der DE 195 43 745 A1, der DE 196 01 034 A1, der DE 197 05 607 A1 oder der DE 41 17 175 A1 ausführlich erläutert.

Die DE 195 43 745 A1 beschreibt beispielsweise eine Ausführungsform, bei der der Spinnrotor über eine magnetische Lageranordnung sowohl radial als auch axial abgestützt ist. Das in der DE 195 43 745 A1 beschriebene, rotorschaftendseitig angeordnete Magnetlager weist einen Rotormagnetring sowie einen Statormagnetring auf. Die beiden Magnetringe sind dabei magnetisch so ausgerichtet, daß zwischen ihnen ein Lagerspalt entsteht. Zur Unterdrückung der insbesondere während der Anlaufphase auftretenden radialen Schwingungen des magnetisch gelagerten Spinnrotors ist der Statormagnet außerdem in radialer Richtung begrenzt beweglich gelagert. Die radialen Auslenkungen des Statormagnetringes werden dabei durch eine mechanische Reibvorrichtung bedämpft.

Nachteilig bei dieser bekannten Einrichtung ist allerdings, daß die insbesondere beim Verspinnen von synthetischen Materialien im Bereich des Spinnrotors auftretende statische Ladung nicht definiert abfließen kann, da der Spinnrotor galvanisch von den geerdeten Teilen der Offenend-Spinnvorrichtung getrennt ist.

Diese statische Ladung wirkt sich störend auf den Spinnprozeß aus.

Bei der Offenend-Spinnvorichtung gemäß DE 197 05 607 A1 ist der Spinnrotor mit seinem Rotorschaft in den Keilspalten einer Stützscheibenlagerung abgestützt und liegt axial an einem aerostatischen Lager an. Der Rotorschaft besteht wenigstens im Bereich seiner mit dem Axiallager zusammenwirkenden Lagerfläche aus Karbid.

Auch bei dieser bekannten Lageranordnung kann es aufgrund der galvanisch getrennten Lagerung des Spinnrotors beim Verspinnen, insbesondere von Synthetikmaterial zu einer statischen Aufladung des Spinnrotors und damit zu nachteiligen Auswirkungen auf den Spinnprozeß kommen. Selbst zeitweilige, ungewollte Berührungen zwischen der Rotorschaftlagerfläche und der aus einem Kohlenstoffwerkstoff bestehenden Lagerplatte des Axiallagers können keine ausreichende Ladungsabfuhr bewirken.

Des weiteren ist durch die DE 196 01 034 A1 eine Offenend-Spinnvorrichtung bekannt, in welcher der Spinnrotor sowohl radial als auch axial aerostatisch gelagert ist.

Wie bei den beiden zuvor beschriebenen Lageranordnungen tritt auch bei der Lageranordnung gemäß DE 196 01 034 A1 das Problem auf, daß durch den Luftspalt des aerostatischen Lagers während des Spinnbetriebes eine dauerhafte galvanische Trennung des Spinnrotors gegeben ist und daher keine ausreichende Abfuhr der beim Spinnen entstehenden elektrostatischen Ladung erfolgt.

Das Problem einer unzureichenden Erdung des Spinnrotors, insbesondere bei der Verarbeitung von synthetischem Vorlagematerial, ist auch bei Lageranordnungen von Offenend-Spinnvorrichtungen gegeben, wie sie beispielweise durch die DE 41 17 175 A1 bekannt sind.

Bei diesen in der Praxis an sich bewährten Lageranordnungen erfolgt die Radiallagerung des Rotorschaftes üblicherweise über kunststoffbeschichtete Stützscheiben. Da der Rotorschaft im Bereich seiner axialen Abstützung außerdem einen nichtleitenden z.B. oxydkeramischen Einsatz aufweist, kommt es auch hier zu einer galvanischen Isolierung und damit zu statischer Aufladung des Spinnrotors.

Ausgehend von Offenend-Spinnvorrichtungen der eingangs beschriebenen Gattung, und Spinnvorrichtung wie in DE 2 358 255 A = US 3 873 886 A offenbart liegt der Erfindung die Aufgabe zugrunde, derartige Spinnvorrichtungen zu verbessern. Insbesondere soll eine Vorrichtung geschaffen werden, die auch beim Verspinnen von synthetischem Vorlagematerial für eine zuverlässige Ableitung der entstehenden statischen Aufladung des Spinnrotors sorgt.

Diese Aufgabe wird erfindungsgemäß durch eine Vorrichtung gelöst, wie sie im Anspruch 1 beschrieben ist.

Vorteilhafte Ausgestaltungen der Erfindung sind Gegenstand der Unteransprüche.

Die erfindungsgemäße Ausführungsform hat insbesondere den Vorteil, daß durch eine dauerhafte, elektrisch leitende Verbindung des Spinnrotors mit einem geerdeten Teil, vorzugsweise des Gehäuses der Spinnvorrichtung eine statische Aufladung des Spinnrotors, wie sie insbesondere beim Spinnen von Kunstfasern (z.B. Polyester) bzw. Mischgarnen mit einem relativ hohen Kunstfaseranteil infolge der hohen Abzugsgeschwindigkeit des Garnes sowie der hohen Drehfrequenz des Spinnrotors auftritt, auf einfache Weise zuverlässig verhindert werden kann.

Wie im Anspruch 2 dargelegt, ist der Leitmechanismus dabei vorteilhafterweise stationär im Bereich des Axiallagers des Spinnrotors angeordnet und liegt beispielsweise mit einem beweglichen Bauteil am Rotorschaft an.

Die im Anspruch 3 beschriebene vorteilhafte Ausführungsform eines elektrischen Leitmechanismus weist ein kraftbeaufschlagtes, an den Rotorschaft anstellbares und mit dem Gehäuse der Spinnvorrichtung elektrisch leitend verbundenes Ableiterelement auf. Durch die kraftschlüssige Beaufschlagung des Ableiterelements ist dabei ein permanenter Anschluß des Spinnrotors an ein geerdetes Bauteil gewährleistet.

Wie im Anspruch 4 erläutert, ist in bevorzugter Ausbildung vorgesehen, daß die kraftschlüssige Beaufschlagung des Ableitelementes über eine Feder, vorzugsweise eine Druckfeder, erfolgt. Eine solche Druckfeder schafft zuverlässig die Voraussetzung für einen ständigen, guten Kontakt des Ableiterelementes zum Spinnrotor. Dieser Kontakt ist auch bei Schwingungen des Rotorschaftes gewährleistet, wie sie beispielsweise während der Hochlaufphase eines magnetisch gelagerten Spinnrotors, speziell beim Durchqueren seiner Eigenschwingfrequenz, auftreten können.

Als bevorzugte Ausführungsform eines Ableiterelementes kann, wie in Anspruch 5 dargestellt, beispielsweise ein Spitzkegel Verwendung finden. Eine derartige Form des Ableiterelementes bringt den Vorteil, daß die Ableitstelle im Stirnflächenzentrum des Rotorschaftes liegt, so daß trotz der hohen Drehfrequenz des Spinnrotors zwischen dem Ableiterelement und seiner Anlagefläche am Rotorschaftzentrum kaum eine Relativgeschwindigkeit gegeben ist. Der Verschleiß an den beteiligten Bauteilen, sowohl am Rotorschaft als auch am Ableiterelement, kann damit in vertretbaren Grenzen gehalten werden.

Die im Unteranspruch 6 beschriebene Ausführungsform zeigt eine alternative Ausbildung eines Leitmechanismus. Das Ableiterelement ist hier kugelelementartig ausgebildet. Die mit einer solchen Ausführungsform erzielbaren Vorteile sind ähnlich wie bei einer Ausführung nach Anspruch 5. Ergänzend kommt hinzu, daß aufgrund der Kugeloberfläche die Auflagefläche des Ableiterelementes am Rotorschaft selbst bei Vibrationen oder Schwingungen des Rotorschaftes immer gleich bleibt, so daß auch im Schwingungsbereich stets eine konstante Ableitung der statischen Ladung gewährleistet ist.

In einer vorteilhaften Ausführungsform, die im Anspruch 7 dargelegt ist, weist der Rotorschaft im Berührungspunkt mit dem Ableiterelement eine Zentrierbohrung auf. Eine solche Zentrierbohrung führt, insbesondere bei der vorbeschriebenen Ausbildung des Ableiterelementes als Spitzkegel oder Kugel zu einer Zentrierung des Ableiterelementes im Zentrum der Rotorschaftstirnfläche, was sich durch eine bessere Lagefixierung des Ableiterelementes positiv auswirkt.

In einer weiteren Ausführungsform, die im Anspruch 8 beschrieben ist, erfolgt die Ableitung der am Spinnrotor entstehenden statische Aufladung über einen Schleifer, der an der Stirnfläche aber auch an der Umfangsfläche des Rotorschaftes anliegen kann. Da sich eine unsymmetrische Kraftbeaufschlagung ungünstig auf den Lauf eines Spinnrotors, insbesondere bei einer berührungslosen Lagerung, auswirken kann, sollte beim Einsatz eines einzelnen Schleifers, z.B. am Rotorschaftumfang, keine zu große Radialkraft auf den Rotorschaft aufgebracht werden. Bei magnetischer oder aerodynamischer Lagerung des Spinnrotors ist es im Interesse eines Kraftausgleiches günstiger, mehrere sich bezüglich ihrer Krafteinleitung kompensierende Schleifer zu verwenden.

Die im Anspruch 9 beschriebene Ausführungsform eines elektrischen Leitmechanismus ist besonders vorteilhaft bei einem magnetisch gelagerten Spinnrotor. Ein in eine Einrichtung zur radialen Dämpfung des Rotorschaftes integriertes Gleitlager umfaßt dabei mit geringem Spiel den Rotorschaft oder einen rotationssymmetrischen Rotorzapfen. Vorzugsweise besteht das Gleitlager dabei aus einem wenigstens schwach leitenden Werkstoff.

Weitere Einzelheiten der Erfindung sind den anhand von Zeichnungen dargestellten Ausführungsbeispielen entnehmbar.

Es zeigt:
- Fig.1:: eine schematische Darstellung einer Offenend-Spinnvorrichtung in Seitenansicht,
- Fig.2:: einen in einer Stützscheibenlagerung umlaufenden Spinnrotor mit einem magnetischen Axiallager sowie einem erfindungsgemäßen Leitmechanismus mit spitzkegelförmigem Ableiterelement,
- Fig.3:: eine Spinnrotorlagerung gemäß Fig.2 mit einem Leitmechanismus, dessen Ableiterelement eine konvexe Anlagefläche aufweist,
- Fig.4:: einen Leitmechanismus gemäß Fig.2 mit einer Zentrierbohrung im Rotorschaftende in einem größeren Maßstab,
- Fig.5:: eine weitere Ausführungsform eines erfindungsgemäßen Leitmechanismus in Form eines auf dem Umfang des Rotorschaftes anliegenden Kontaktschleifers,
- Fig.6:: eine alternative Ausführungsform eines Leitmechanismus in Form eines an der Stirnfläche der Rotorschaftes anliegenden Kontaktschleifers,
- Fig.7:: eine weitere Ausführungsform des erfindungsgemäßen Leitmechanismus mit einem radial dämpfend angeordneten Gleitlager.

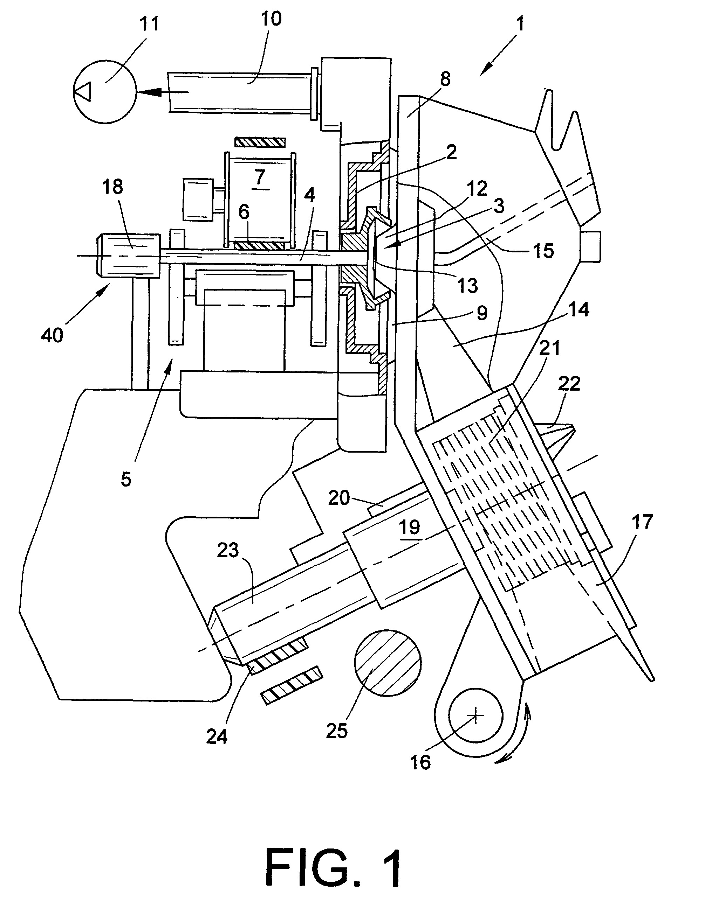

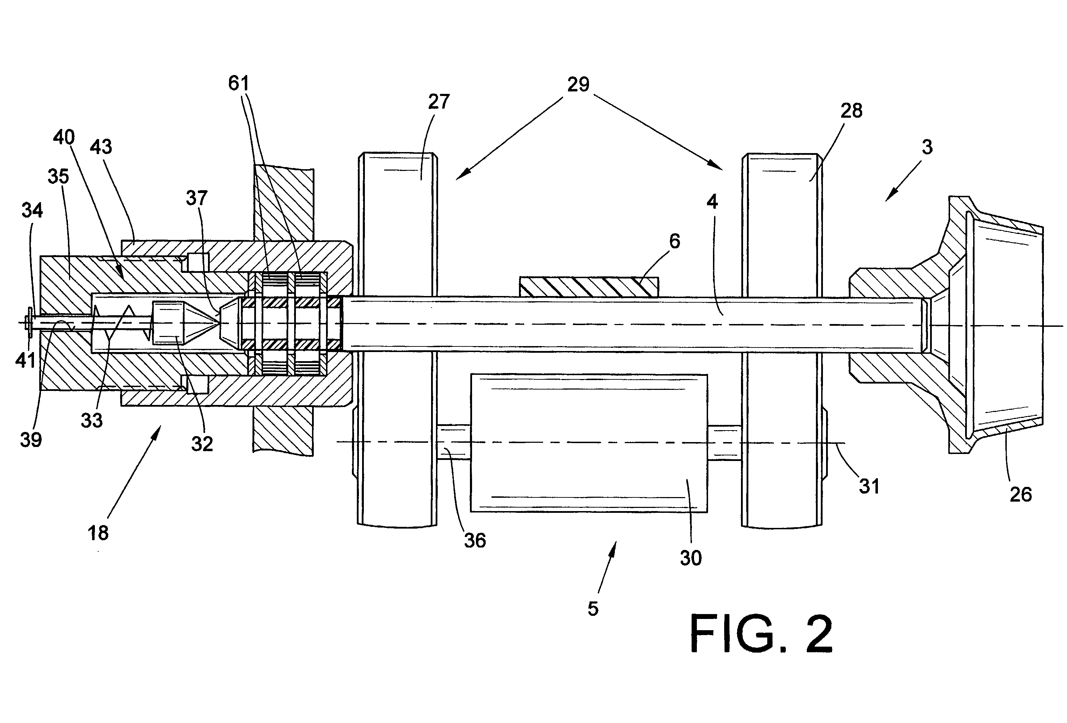

Die in Fig. 1 dargestellte Offenend-Spinnvorrichtung trägt insgesamt die Bezugszahl 1. Das Spinnaggregat verfügt dabei, wie bekannt, über ein Rotorgehäuse 2, in dem die Spinntasse eines Spinnrotors 3 mit hoher Drehzahl umläuft. Der Spinnrotor 3 ist mit seinem Rotorschaft 4 in den Lagerzwickeln einer Stützscheibenlagerung 5 abgestützt und wird durch einen maschinenlangen Tangentialriemen 6, der durch eine Andrückrolle 7 angestellt wird, beaufschlagt. Die axiale Fixierung des Rotorschaftes 4 auf der Stützscheibenlagerung 5 erfolgt über ein permanentmagnetisches Axiallager 18. Vorzugsweise im Bereich des Axiallagers 18 ist ein in Fig. 1 nicht dargestellter Ableitmechanismus 40 angeordnet, der nachfolgend anhand der in den Figuren 2-7 dargestellten vorteilhaften Ausführungsformen detailliert erläutert wird.

Wie üblich ist das an sich nach vorne hin offene Rotorgehäuse 2 während des Betriebes durch ein schwenkbar gelagertes Deckelelement 8, in das eine (nicht näher dargestellte) Kanalplatte mit einer Dichtung 9 eingelassen ist, verschlossen. Das Rotorgehäuse 2 ist außerdem über eine entsprechende Absaugleitung 10 an eine Unterdruckquelle 11 angeschlossen, die den im Rotorgehäuse 2 notwendigen Spinnunterdruck erzeugt.

Im Deckelelement 8 ist ein Kanalplattenadapter 12 angeordnet, der die Fadenabzugsdüse 13 sowie den Mündungsbereich des Faserleitkanales 14 aufweist. An die Fadenabzugsdüse 13 schließt sich ein Fadenabzugsröhrchen 15 an. Außerdem ist am Deckelelement 8, das um eine Schwenkachse 16 begrenzt drehbar gelagert ist, ein Auflösewalzengehäuse 17 festgelegt. Das Deckelelement 8 weist des weiteren rückseitig Lagerkonsolen 19, 20 zur Lagerung einer Auflösewalze 21 beziehungsweise eines Faserbandeinzugszylinders 22 auf. Die Auflösewalze 21 wird im Bereich ihres Wirtels 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

Die Fig. 2 zeigt die Lagerung des Offenend-Spinnrotors 3 im Detail, wobei das Axiallager 18 mit einer vorteilhaften Ausführung eines Ableitmechanismus im Schnitt dargestellt ist. Wie angedeutet, ist der aus einer Spinntassse 26 und einem Rotorschaft 4 bestehende Spinnrotor 3 mit seinem Rotorschaft 4 in den Lagerzwickeln einer insgesamt mit 5 bezeichneten Stützscheibenlagerung abgestützt.

Derartige Stützscheibenlagerungen 5 verfügen, wie bekannt, jeweils über zwei Stützscheibenpaare, deren Achsen 31 zueinander parallel verlaufen. Der Übersichtlichkeit halber ist in Fig. 2 nur das hintenliegende Stützscheibenpaar 29 mit seinen Stützscheiben 27, 28 dargestellt. Die Stützscheiben 27, 28 sind dabei auf einer gemeinsamen Welle 36 festgelegt, die in einer Wälzlageranordnung 30 umläuft. Die Stützscheiben 27, 28 weisen im Bereich ihrer Laufflächen außerdem einen Belag auf , der zu einer galvanisch getrennten Lagerung des Spinnrotors 3 führt.

Im Bereich des Axiallagers 18, in dem auch die Axiallagermagnete 61 zu erkennen sind, ist der insgesamt mit 40 bezeichnete Ableitmechanismus zu sehen. Er besteht aus einem spitzkegelförmig ausgebildeten Ableiterelement 32, welches an die Stirnseite 37 des Rotorschaftes 4 angestellt ist sowie einer kraftbeaufschlagenden Druckfeder 33, die sich an einem Verschlußelement 35, welches gleichsam die Magnetringe 61 des Axiallagers 18 fixiert, abstützt. Die axiale Bohrung 39 im Verschlußelement 35 dient zur Führung des Leitstiftes 34 der seinerseits mit dem spitzkegelförmigen Ableiterelement 32 verbunden ist. Das Verschlußelement 35 ist in die stationäre Lagerkomponente 43 des Axiallagers 18 eingeschraubt. Der Ableitmechanismus 40 ist, z.B. bei einem Austausch des Rotors 3, durch den Sicherungsring 41, der in einer Nut auf dem Leitstift 34 fixiert ist, gegen Herausfallen gesichert.

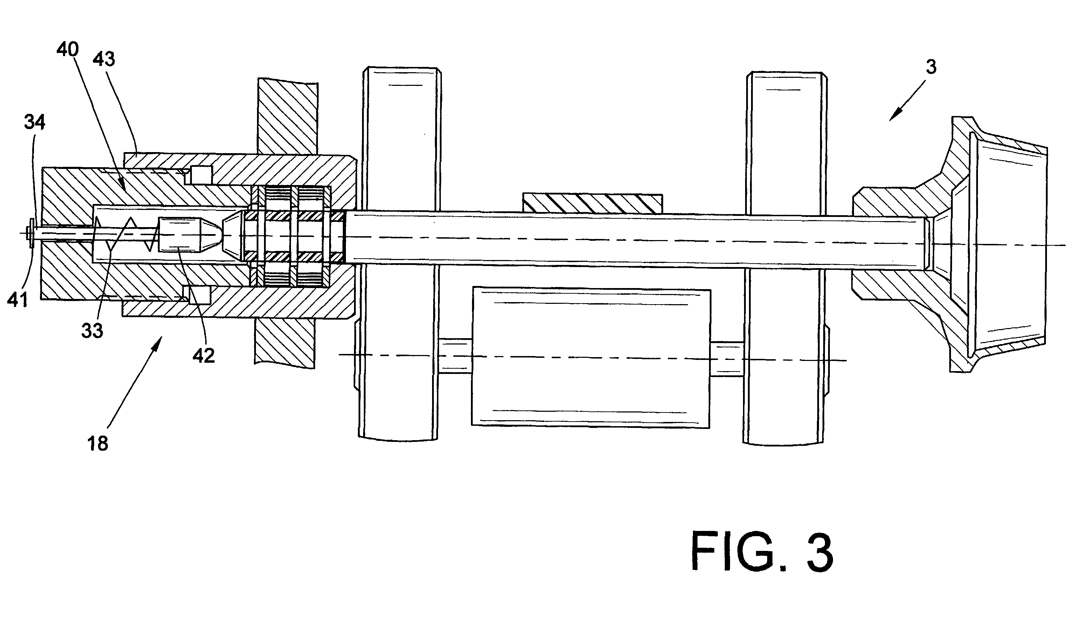

Die in Fig. 3 dargestellte Ausbildung eines Ableitmechanismus 40 unterscheidet sich von dem in Fig. 2 abgebildeten Ausführungsbeispiel insbesondere durch die Form des Ableiterelementes 42. Im Gegensatz zu dem in Fig. 2 dargestellten spitzkegelförmigen Ableiterelement 32 weist das hier mit der Bezugszahl 42 gekennzeichnete Ableiterelement eine konvexgewölbte Anlagefläche auf. Die Kraftbeaufschlagung sowie die Fixierung des Ableiterelementes 42 am Gehäuse des Axiallagers 18 erfolgt dabei vorzugsweise wie bereits im Ausführungsbeispiel der Fig. 2 erläutert.

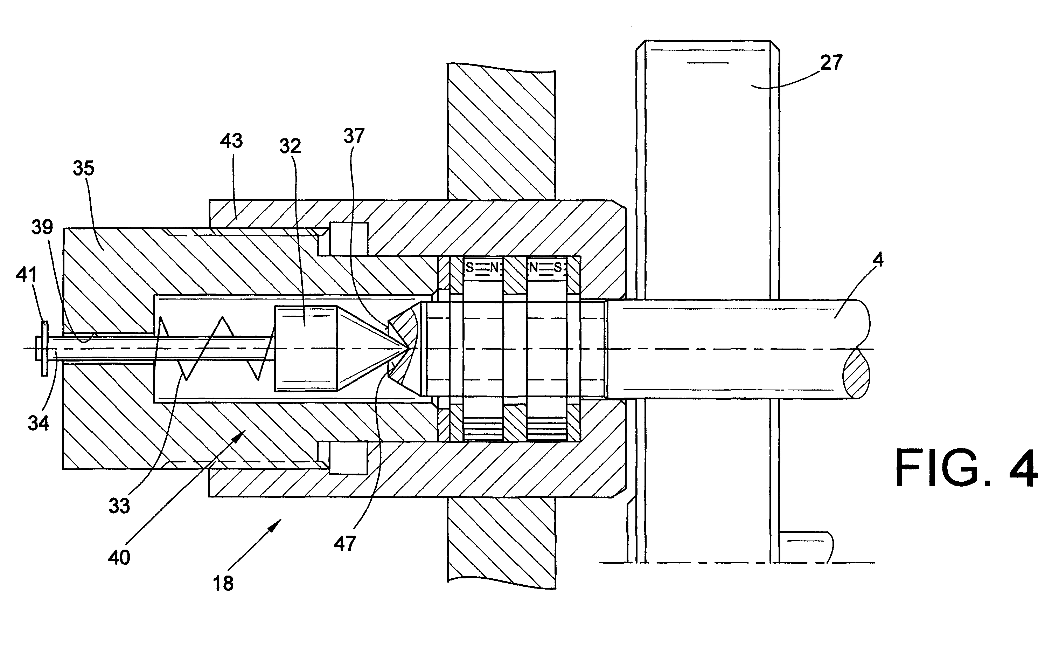

Eine weitere Ausführungsform des Ableitmechanismus ist in Fig.4 in vergrößertem Maßstab dargestellt. Die Ausführungsform gemäß Fig. 4 ist ähnlich, wie die Ausführungsform gemäß Fig.2 und unterscheidet sich im wesentlichen durch eine Zentrierbohrung 47 auf der Stirnseite 37 des Rotorschaftes 4. Der Vorteil einer solchen Ausführung ist der, daß das als Spitzkegel ausgeformte Ableiterelement 32 mit seiner Spitze in der an der Stirnseite 37 des Rotorschaftes 4 befindlichen Zentrierbohrung 47 fixiert wird. Durch die Zentrierung des Ableiterelementes 32 sowie durch die permanente Kraftbeaufschlagung mittels Feder 33 kommt es zu einer dauerhaften und sicheren Erdung des Rotors.

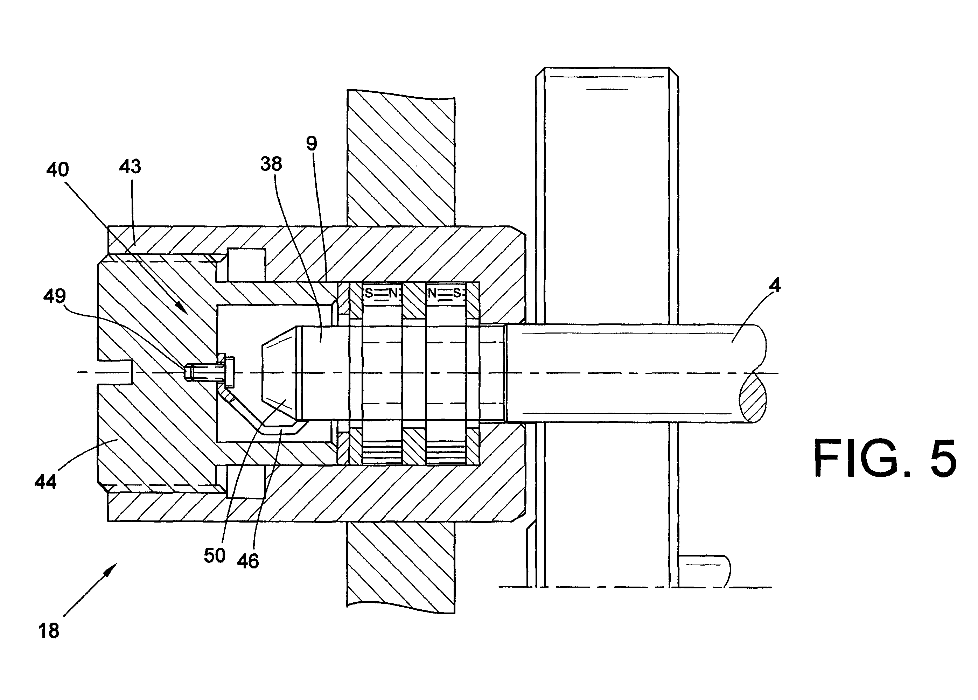

Die Fig. 5 zeigt eine weitere vorteilhafte Ausgestaltung eines Ableitmechanismus. Die Ableitung der statischen Ladung vom Rotor 3 geschieht hier über ein auf der Umfangsfläche 38 des Rotorschaftes 4 laufendes Schleifelement 46. Das Schleifelement 46 selber ist mit einer Schraube 48 in einem Axialgewinde 49 eines Verschlußelementes 44 befestigt. Das Verschlußelement 44 ist mit seinem Außengewinde in die statische Lagerkomponente 43 eingeschraubt. Die Anfasung 50 des Rotorschaftes 4 sowie die entsprechende Form des Schleifelementes 46 stellen dabei sicher, daß z.B. beim Einsetzen des Rotors die Kontaktfläche des Schleifelementes 46 problemlos auf die Umfangsfläche 38 des Spinnrotorschaftes rutscht. Auch wenn bei eingebautem Rotor das Verschlußelement 44 in die statische Lagerkomponente 43 eingeschraubt wird, ist durch die Anfasung 50 sowie die Form des Schleifelementes 46 gewährleistet, das es zu keinen Komplikationen kommt.

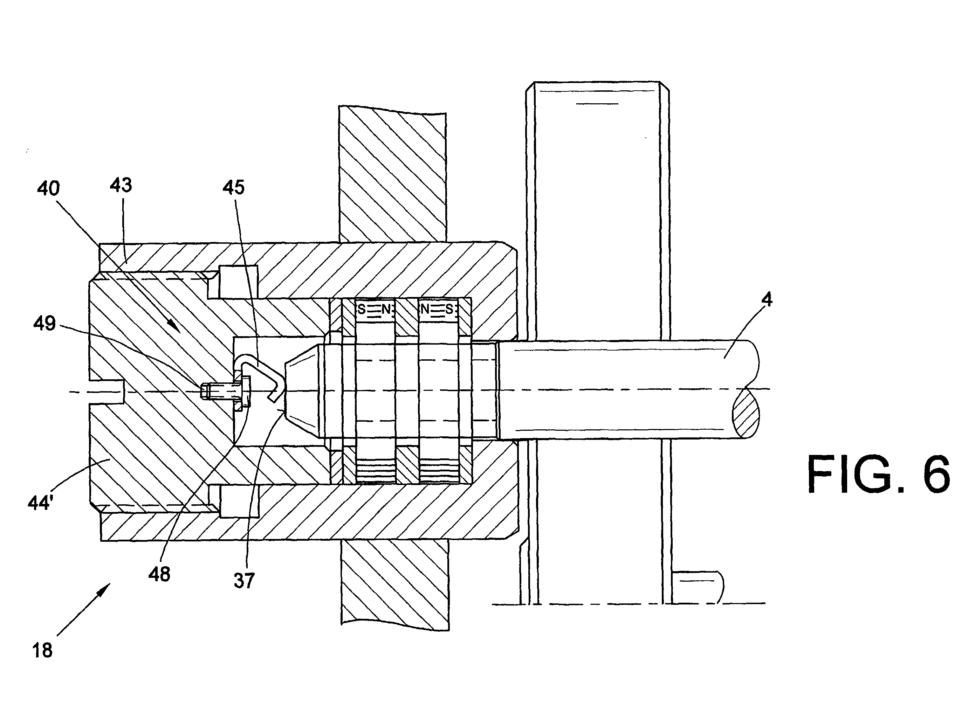

Die Fig. 6 zeigt einen Leitmechanismus der mit dem der Fig. 5 vergleichbar ist. Der Unterschied besteht hauptsächlich in Form und Kontaktpunkt des verwendeten Schleifelementes. Im Gegensatz zu Fig. 5 entsteht der Kontakt hier durch Anlegen eines Schleifelementes 45 an die Stirnfläche 37 des Rotorschaftes 4. Die Befestigung des Schleifelementes 45 erfolgt, wie bei der zuvor beschriebenen Ausführungsform, durch eine Befestigungsschraube 48, die in das Gewinde 49 des Verschlußelementes 44' eingeschraubt wird. Wie die Ausführungsformen gemäß der Fig. 2-4 bietet auch die Ausführungsform gemäß Fig. 6 den Vorteil, daß der Kontakt im Stirnflächenzentrum des Rotorschaftes 4 stattfindet, so daß es aufgrund der relativ geringen Umfangsgeschwindigkeit in diesem Bereich zu einem noch vertretbaren Verschleiß an den beteiligten Bauteilen, das heißt am Rotorschaft 4 sowie am Schleifelement 45, kommt.

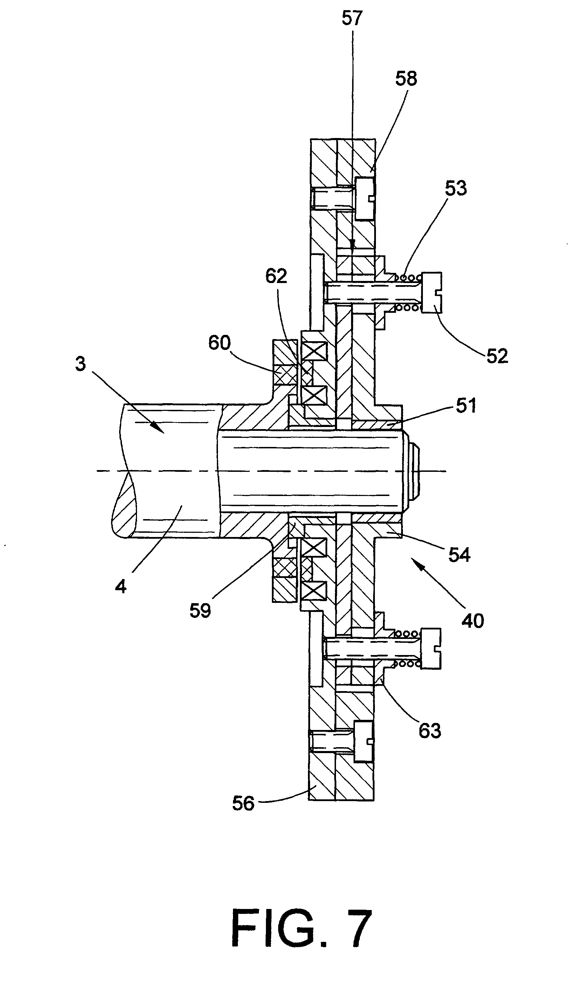

Bei der in Fig. 7 abgebildeten Ausführungsform wird die elektrostatische Ladung des Rotors 3 über ein den Rotorschaft 4 mit Spiel umschließendes Gleitlager 51 in den Stator abgeführt. Aufgrund des leitenden Gleitlagermaterials sowie eines nur minimalen Lagerspiels (Luftspalt max. 0,2 mm) ist eine nahezu konstante Ableitung der statischen Ladungen gewährleistet, so daß es im Extremfall aufgrund der kurzen Isolierstrecke nur zu sehr geringen statischen Aufladungen am Spinnrotor kommen kann. Um eine gute Ableitung der statischen Aufladungen zu garantieren, muß selbstverständlich eine dauerhafte, leitende Verbindung zwischen der beweglichen Reibplatte 54, der Zwischenplatte 55 und dem festen Lagerschild 56 vorhanden sein. Alternativ bzw. ergänzend ist ebenfalls eine Ableitung über die bewegliche Reibplatte 54, die Andruckplättchen 63, die Federn 53 und die Einstellschrauben 52 in das feste Lagerschild 56 möglich. Hierbei ist dementsprechend auf eine geeignete Werkstoffauswahl zu achten.

Durch die Verwendung eines derartigen Gleitlagers 51 ist nicht nur eine zuverlässige Ableitung der im Bereich des Spinnrotors 3 auftretenden statischen Aufladung gewährleistet, sondern es wird auch das Problem des Schwingens von berührungslos gelagerten Spinnrotoren bei Erreichen ihres Eigenfrequenzbereiches gemildert.

Das Gleitlager 51 ist in einer radial verschiebbar und gedämpft gelagerten Reibplatte 54 angeordnet. Die Reibplatte 54 ist ihrerseits über Schraubenbolzen 52 mit einem Lagerschild 56 verbunden. Das heißt, die Druckfedern 53 im Bereich der Schraubenbolzen 52 legen die radial beweglich gelagerte Reibplatte 54 mit einer gewissen axialen Kraft an die Zwischenplatte 55 an, die außerdem an das feste Lagerschild 56 angestellt wird. Auf diese Weise kommt es bei einer radialen Auswanderung des Rotorschaftes im Eigenschwingungsbereich des Spinnrotors zu einer mechanischen Reibung im Bereich der Reibfläche 57 und somit zu einer ausreichenden Dämpfung. Durch Verstellung der Schrauben 52 kann der Federdruck und damit der erforderliche Reibdruck eingestellt werden, so daß jede gewünschte Dämpfung erzielt werden kann. Die maximale radiale Auslenkung des Rotorschaftes 4 ist entweder durch ein herkömmliches Begrenzungslager 59, durch einen mechanischen Anschlag z.B. in Form eines Ringes 58 oder durch eine Begrenzung des Radialreibweges durch entsprechende Dimensionierung der Schraubenbolzen 52 bzw. der Schraubenbohrungen in der Reibplatte 54 zu realisieren.

## Patentansprüche

1. Offenend-Spinnvorrichtung (1) mit einer Lageranordnung zur Abstützung eines mit hoher Drehfrequenz rotierbar gelagerten Spinnrotors (3,4), wobei dessen Lagerung seine galvanische Trennung von Lager und Gehäuse bewirkt,
**dadurch gekennzeichnet,**
**daß** der Spinnrotor (3) zur Abfuhr der während des Spinnprozesses entstehenden statischen Aufladung über einen elektrischen Leitmechanismus (40) mit einem geerdeten Bauteil der Spinnvorrichtung (1) verbunden ist.

2. Offenend-Spinnvorrichtung nach Anspruch 1, **dadurch**
**gekennzeichnet, daß** der Leitmechanismus (40) im Bereich eines Axiallagers (18) angeordnet ist.

3. Offenend-Spinnvorrichtung nach Anspruch 2, **dadurch**
**gekennzeichnet, daß** der elektrische Leitmechanismus (40) ein kraftbeaufschlagtes, an den Rotorschaft (4) anstellbares und mit dem Lagergehäuse (43) leitend verbundenes Ableiterelement (32,42) aufweist.

4. Offenend-Spinnvorrichtung nach Anspruch 3, **dadurch**
**gekennzeichnet, daß** das kraftbeaufschlagende Element eine Feder (33) ist.

5. Offenend-Spinnvorrichtung nach einem der Ansprüche 3-4,
**dadurch gekennzeichnet, daß** das Ableiterelement (32) als am Rotorschaft (4) anliegender Spitzkegel ausgebildet ist.

6. Offenend-Spinnvorrichtung nach einem der Ansprüche 3-4,
**dadurch gekennzeichnet, daß** das Ableiterelement (42) als am Rotorschaft (4) anliegendes Kugelelement ausgebildet ist.

7. Offenend-Spinnvorrichtung nach einem der vorherigen
Ansprüche 3-6, **dadurch gekennzeichnet, daß** der Rotorschaft (4) am Berührungspunkt zum Ableiterelement (32,42) eine Zentrierbohrung (47) aufweist.

8. Offenend-Spinnvorrichtung nach einem der vorherigen
Ansprüche, **dadurch gekennzeichnet, daß** als Ableiterelement wenigstens ein am Rotorschaft (4) anliegendes Schleifelement (45, 46) vorgesehen ist.

9. Offenend-Spinnvorrichtung nach einem der vorherigen
Ansprüche,**dadurch gekennzeichnet, daß** der Leitmechanismus (40) durch ein den Rotorschaft (4) mit Spiel umfassendes Gleitlager (51) gebildet ist.

10. Offenend-Spinnvorrichtung nach Anspruch 9, **dadurch**
**gekennzeichnet, daß** das Gleitlager (51) in einer Reibplatte (54) angeordnet ist, die radial gedämpft an einem Statorteil, insbesondere dem Lagerschild (56) der Spinnrotorlagerung angebracht ist.

## Claims

1. An open-end spinning device (1) having a bearing configuration for supporting a spinning rotor (3, 4) rotatably mounted with a high rotating frequency, its mounting bringing about its electrical isolation from the bearing and the housing,
**characterised in that** the spinning rotor (3) is connected to an earthed component of the spinning device (1) for the carrying away of the static charge produced during the spinning process via an electric derivation mechanism (40).

2. An open-end spinning device according to Claim 1,
**characterised in that** the derivation mechanism (40) is disposed in the region of an axial bearing (18).

3. An open-end spinning device according to Claim 2,
**characterised in that** the electrical derivation mechanism (40) comprises a force-loaded derivation element (32, 42) which can be placed against the rotor shaft (4) and is conductively connected to the bearing housing (43).

4. An open-end spinning device according to Claim 3,
**characterised in that** the force-applying element is a spring (33).

5. An open end spinning device according to one of Claims 3-4,
**characterised in that** the derivation element (32) is constructed as a pointed cone adjacent to the rotor shaft (4).

6. An open-end spinning device according to one of Claims 3-4,
**characterised in that** the derivation element (42) is constructed as a spherical element adjacent to the rotor shaft (4).

7. An open-end spinning device according to one of the preceding Claims 3-6,
**characterised in that** the rotor shaft (4) comprises a centring bore (47) at the contact point with the derivation element (32, 42).

8. An open-end spinning device according to one of the preceding Claims,
**characterised in that** at least one abrasive element (45, 46) adjacent to the rotor shaft (4) is provided as the derivation element.

9. An open-end spinning device according to one of the preceding Claims,
**characterised in that** the derivation mechanism (40) is formed by a sliding bearing (51) encircling the rotor shaft (4) with clearance.

10. An open-end spinning device according to Claim 9,
**characterised in that** the sliding bearing (51) is disposed in a friction plate (54), which is mounted with radial damping on a stator part, in particular the end shield (56) of the spinning rotor bearing.

## Revendications

1. Dispositif de filature (1) à fibre libérée, avec un ensemble de palier pour le soutien d'un rotor de filature (3, 4) monté tournant à haute fréquence de rotation, rotor dont le palier de montage produit sa séparation galvanique vis-à-vis du palier et du carter,
**caractérisé en ce que** le rotor de filature (3) est, afin d'évacuer la charge statique apparaissant pendant l'opération de filature, relié par l'intermédiaire d'un mécanisme de conduction électrique (40) à un élément mis à la terre du dispositif de filature (1).

2. Dispositif de filature à fibre libérée selon la revendication 1, **caractérisé en ce que** le mécanisme de conduction (40) est disposé dans la région d'un palier axial (18).

3. Dispositif de filature à fibre libérée selon la revendication 2, **caractérisé en ce que** le mécanisme de conduction électrique (40) présente un élément de dérivation (32, 42) sollicité en force, pouvant être appliqué contre l'arbre de rotor (4) et relié en conduction au corps de palier (43).

4. Dispositif de filature à fibre libérée selon la revendication 3, **caractérisé en ce que** l'élément de sollicitation en force est un ressort (33).

5. Dispositif de filature à fibre libérée selon la revendication 3 ou 4, **caractérisé en ce que** l'élément de dérivation (32) est réalisé sous la forme d'un cône pointu appliqué contre l'arbre de rotor (4).

6. Dispositif de filature à fibre libérée selon la revendication 3 ou 4, **caractérisé en ce que** l'élément de dérivation (42) est réalisé sous la forme d'un élément sphérique appliqué contre l'arbre de rotor (4).

7. Dispositif de filature à fibre libérée selon l'une des revendications 3 à 6, **caractérisé en ce que** l'arbre de rotor (4) présente un perçage de centrage (47) au point de contact avec l'élément de dérivation (32, 42).

8. Dispositif de filature à fibre libérée selon l'une des revendications précédentes, **caractérisé en ce qu'**il est prévu comme élément de dérivation au moins un élément frotteur (45, 46) appliqué contre l'arbre de rotor (4).

9. Dispositif de filature à fibre libérée selon l'une des revendications précédentes, **caractérisé en ce que** le mécanisme de conduction (40) est formé par un palier lisse (51) entourant avec jeu l'arbre de rotor (4).

10. Dispositif de filature à fibre libérée selon la revendication 9, **caractérisé en ce que** le palier lisse (51) est disposé dans une plaque de friction (54) qui est installée en étant radialement amortie sur un élément de stator, notamment sur le flasque (56) du palier de montage du rotor de filature.
